# EUROPEAN PATENT APPLICATION

(11) **EP 4 455 956 A1**
(43) Date of publication of application: **30.10.2024**
(21) Application number: 22922896.0
(22) Date of filing: 29.01.2022
(51) Int. Cl.: G06Q 10/06

(54) **WORKFLOW CONSTRUCTION AND MONITORING METHOD AND SYSTEM, AND MEDIUM AND PROGRAM PRODUCT**

(71) Applicant: Siemens Aktiengesellschaft, 80333 München (DE)
(72) Inventor: ZHOU, Zhenhua, Shanghai 200120 (CN); WENG, Changwei, Nanjing, Jiangsu 211100 (CN)
(74) Representative: Isarpatent
(86) International application number: PCT/CN2022/075065
(87) International publication number: WO 2023/142066

(57) **Abstract**

Disclosed in the embodiments of the present application are a workflow construction and monitoring method and system, and a medium and a program product. The method comprises: on the basis of a behavior tree construction operation performed on a graphical user interface by a user, generating a behavior tree corresponding to a workflow, wherein the behavior tree comprises functional block nodes, each of which correspondingly implements a service operation; adding and connecting at least one data block to each functional block node among at least one functional block node in the behavior tree, wherein each data block is used for presenting corresponding data in the service operation implemented by the functional block node that is connected to the data block; and parsing the behavior tree to which the data blocks are connected, and deploying the workflow corresponding to the behavior tree into a runtime of a corresponding work unit, such that the workflow is executed in the runtime so as to control resources in the work unit to execute service operations according to the workflow, and corresponding data, which is acquired during the execution of the service operations, is provided to corresponding data blocks for display. The technical solution can quickly create and monitor a workflow in a visual manner.

## Description

### TECHNICAL FIELD

Embodiments of this application relate to the technical field of industry, and in particular to a workflow constructing and monitoring method and system, a computer-readable storage medium and a computer program product.

### BACKGROUND

Workflow can be simply defined as a description of a series of operation processes. Workflow is widely used in fields such as automation systems, artificial intelligence, and robotics. For example, a workflow of a product sorting line in an automation system can be simply described as starting, taking photos, classifying, and moving products to a target location. A model deployment workflow in the field of artificial intelligence can be described as data collection, data annotation, model training, and model deployment.

But currently, these workflows only have textual descriptions. If users want to execute such workflows, they need to follow the textual descriptions and may use multiple engineering tools, which are almost unrelated to each other and provide completely different user operation behaviors. This is not only a challenge for users, but also greatly increases costs, reduces efficiency, and limits flexibility due to long development cycles. For example, in the field of artificial intelligence, users need to perform data collection by using a tool, perform data annotation manually or by using other tools, write Python scripts for model training, and perform deployment through deploy tools.

Therefore, those skilled in the art are still working to find other workflow solutions.

### SUMMARY

Embodiments of this application provide a workflow constructing and monitoring method and system, a computer-readable storage medium and a computer program product for conveniently implementing workflow construction and monitoring in workflow execution processes.

In a first aspect, provided is a workflow constructing and monitoring method, including: generating a behavior tree corresponding to a workflow on the basis of a behavior tree construction operation of a user on a graphical user interface, the behavior tree including function block nodes, each function block node correspondingly implementing a service operation; adding and connecting at least one data block to each function block node of at least one function block node in the behavior tree, each data block being configured to present corresponding data in the service operation of the function block node connected thereto; and parsing the behavior tree connected with data blocks, deploying the workflow corresponding to the behavior tree to a runtime of a corresponding workcell so that the runtime executes the workflow to control each resource in the workcell to execute the service operation according to the workflow, and providing corresponding data obtained in an execution process of the service operation to the corresponding data block for display.

In a second aspect, provided is a workflow constructing and monitoring system, including: a node library provided with behavior tree nodes for constructing behavior trees and various types of data blocks, the behavior tree nodes including: function block nodes, each function block node correspondingly implementing a service operation; a graphical interface module configured to provide a user a graphical user interface for behavior tree construction and data block addition and connection operations; an edit processing module configured to generate a behavior tree corresponding to a workflow on the basis of a behavior tree construction operation of the user on the graphical user interface, and add and connect at least one data block to each function block node of at least one function block node in the behavior tree on the basis of the data block addition and connection operations, each data block being configured to present corresponding data in the service operation of the function block node connected thereto; and a parsing and deployment module configured to parse the behavior tree connected with data blocks, deploy the workflow corresponding to the behavior tree to a runtime (30) of a corresponding workcell so that the runtime executes the workflow to control each resource in the workcell to execute the service operation according to the workflow, and provide corresponding data obtained in an execution process of the service operation to the corresponding data block for display.

In a third aspect, provided is another workflow constructing and monitoring system, including: at least one memory configured to store a computer-readable code; and at least one processor configured to call the computer-readable code to perform the steps of the method provided in the first aspect.

In a fourth aspect, provided is an IT domain and OT domain fused system, including an IT device and the workflow constructing and monitoring system in any implementation described above, where the workflow is an OT domain workflow; the workcell is a workcell in an OT domain; the resource is an OT resource; and the workflow constructing and monitoring system further includes: an OT domain microservice generator for generating a microservice on the basis of the behavior tree, so that the IT device triggers the runtime of the workcell to execute the OT domain workflow by calling the microservice.

In a fifth aspect, provided is a computer-readable medium, where the computer-readable medium stores computer-readable instructions, the computer-readable instructions, when executed, implementing the steps of the method provided in the first aspect.

In a sixth aspect, provided is a computer program product, where the computer program product is tangibly stored on a computer-readable medium and includes computer-readable instructions, the computer-readable instructions, when executed, causing at least one processor to perform the steps of the method provided in the first aspect.

In the embodiments of this application, by constructing a behavior tree corresponding to a workflow on the basis of a low code platform, and adding at least one data block to a corresponding function block node in the behavior tree, when a service operation corresponding to the function block node is executed, corresponding data such as monitoring videos, captured images, or curves representing live data can be displayed on the data block connected to the function block node, so that the execution process of the function block node can be intuitively viewed. Moreover, by organizing nodes in the form of behavior trees, an intuitive workflow operation process from development to implementation can be generated, thus reducing the complexity of workflow construction and achieving fast and convenient workflow constructing and monitoring.

For each aspect above, optionally, the behavior tree is parsed, and the OT domain workflow corresponding to the behavior tree is deployed to the runtime of the workcell, so that each resource in the workcell executes operations according to the workflow. In this way, the goal of controlling workcell operations on the basis of the workflow is achieved.

For each aspect above, optionally, the workflow is an OT domain workflow; the workcell is a workcell in an OT domain; and the device is an OT device. In this way, workflow construction in the OT domain is achieved.

For each aspect above, optionally, a microservice is generated on the basis of the OT domain workflow, so that an IT device in the IT domain triggers the runtime of the workcell to execute the OT domain workflow by calling the microservice. In this way, the IT device can call the microservice generated on the basis of the OT domain workflow, thus triggering the execution of the OT workflow and achieving the fusion of the IT domain and the OT domain.

### BRIEF DESCRIPTION OF THE DRAWINGS

FIG. 1A is an exemplary flowchart of a workflow constructing and monitoring method according to embodiments of this application.
FIG. 1B is an exemplary diagram of a resource knowledge map in an example of this application.
FIG. 1C is an exemplary diagram of each resource node associated with a function block node in an example of this application.
FIG. 1D is an exemplary flowchart of another workflow constructing and monitoring method according to embodiments of this application.
FIG. 2A is a schematic diagram of a behavior tree constructed in an example of this application.
FIG. 2B to FIG. 2S are respectively schematic diagrams of partial behavior trees constructed in an example of this application.
FIG. 2T is an example of constructing a behavior tree on the basis of function block nodes of a function block typed diagram.
FIG. 2U to FIG. 2X are respectively schematic diagrams of hiding or displaying a data input port or a data output port in an example of this application.
FIG. 2Y is a schematic diagram of respectively adding data blocks for four function block nodes in a behavior tree and displaying corresponding data in each data block in an example of this application.
FIG. 3 is an exemplary structural diagram of a workflow constructing and monitoring system according to an embodiment of this application.
FIG. 4A to FIG. 4D are schematic diagrams of a workflow constructing and monitoring system according to embodiments of this application.
FIG. 4E is a schematic diagram of an application scenario in the field of industrial automation.
FIG 5 is a schematic diagram of hardware implementation of a workflow constructing and monitoring system according to embodiments of this application.

### List of reference numerals:

S11-S13: steps of a workflow constructing and monitoring method
201: function block name
202: function block header
203: link input port
204: link output port
205: link connection
206: sensitive area
207: instruction label
208: input dataset block
209: output dataset block
210: data input port
211: data output port
212: data connection
213: function block icon
214: function block main body
215: data block label
216: data block body
217: monitoring link
110: node library
120: graphical interface module
130: edit processing module
140: parsing and deployment module
150: resource library
100: OT domain low code development platform
10: OT domain low code development tool
20: OT domain microservice generator
30: runtime on a main controller of a workcell
40: microservice
50: third-party device
200: knowledge middle platform
300: IT domain code development platform
301: IT domain code development tool
51: at least one memory
52: at least one processor
53: at least one display
54: bus

### DETAILED DESCRIPTION

A subject described in this specification is discussed now with reference to exemplary implementations. It should be understood that, discussion of these implementations is merely intended to make those skilled in the art better understand and thereby implement the subject described herein, and is not intended to limit the scope of protection of the claims, the applicability, or examples. Changes may be made to the functions and arrangements of the discussed elements without departing from the scope of protection of the content of the embodiments of this application. Various processes or components may be omitted, replaced, or added in each example according to requirements. For example, the described method may be performed according to a sequence different from the described sequence, and steps may be added, omitted, or combined. In addition, features described in relatively some examples may also be combined in other examples.

As used herein, the term "include" and variants thereof represent open terms, and mean "include but is not limited to". The term "on the basis of" represents "at least partially on the basis of". The terms "one embodiment" and "an embodiment" represent "at least one embodiment". The term "another embodiment" represents "at least one another embodiment". The terms "first", "second", and the like may represent different objects or the same object. Other definitions may be included explicitly or implicitly in the following. Unless otherwise clearly specified, the definition of one term is consistent in the entire specification.

The following describes the embodiments of this application in detail with reference to the accompanying drawings.

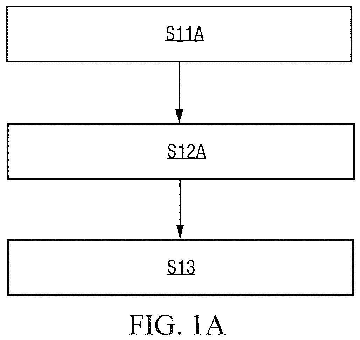

FIG. 1A illustrates an exemplary flowchart of a workflow constructing and monitoring method according to embodiments of this application. As shown in FIG. 1A, the method may include the following steps:
In step S11A, a behavior tree construction operation performed by a user on a graphical user interface on the basis of a preset behavior tree node is received.

In this embodiment, a behavior tree is configured to characterize a workflow that defines operations to be performed by a workcell. For example, it may represent distributed processes in the workcell. In a specific implementation, the workflow here may be further divided into a main workflow and subworkflows. The main workflow is used for limiting the start, the end, and other flow controls that trigger the entire workcell process. The main workflow is the entrance to the entire process, which is linked to at least one subworkflow. The subworkflows are usually major workflows. Each subworkflow corresponds to a subprocess and used for implementing a specific service operation.

A workcell may be a combination of resources such as systems or devices that can implement a relatively complete and independent control process and operation. In this embodiment, constructing a workflow by using a workcell as a basic unit is more in line with the characteristics of industrial control, which can improve the integration of development, and reduce the complexity of development. For example, taking the technical field of industry as an example, workcells may be defined according to actual industrial scenarios. For example, it may be defined that a process corresponds to a workcell, or a workstation in a process may be defined as a workcell, or it may be defined that a work position in a workstation corresponds to a workcell. Process flows of different workcells are different.

In this embodiment, the behavior tree nodes may include flow control nodes and function block nodes. They will be respectively described below in detail.

### I. Flow control nodes

Flow control nodes are configured to implement logic controls in workflows, typically independent of specific service operations in workcells. Through the flow control nodes, users can construct various workflows according to their own needs.

In a specific implementation, the flow control nodes may include main control nodes, logic control nodes and condition nodes. Alternatively, in a specific implementation, the flow control nodes may include one or any combination of main control nodes, logic control nodes and condition nodes. They will be respectively described below in brief.

### 1. Main control nodes

The main control nodes may include some or all of a start node, an end node, a goto node, an anchor node, a stop node and an abort node.

The main control nodes in this embodiment are not standard behavior tree elements, but in this embodiment, they can be configured to control the main processes of the workflow, and can be linked to a state machine of the workflow. The start node is mandatory. In addition, one of the end node or the goto node may also be mandatory. The main control nodes are mainly configured to define the start and end of the workflow. In addition, other element nodes can control the state machine (such as abort and stop) or annotate key process steps to skip to (such as key nodes).

### 2. Logic control nodes

The logic control nodes may include some or all of a sequence (Se) node, a reactive sequence (RSe) node, a parallel (Pa) node, an in-process QC (IPQ) node, a priority (Pr (fallback)) node, a reactive priority (RPr (fallback)) node, an if-then-else (ITE) node and a switch (Sw) node.

The logic control nodes can define how to execute branches in the behavior tree, and are configured to implement branch logic control in the workflow, etc. Each node will be described below in brief:
1) Sequence node: this node may have one to multiple subnodes, and routing will be triggered to each subnode in the sequence of the workflow.
2) Reactive sequence node: its function is the same as that of the sequence node, but the trigger condition will be continuously checked.
3) Parallel node: this node may have one to multiple subnodes, which are started from top to bottom and executed simultaneously in multiple processes or threads.
4) In-process QC node: the quality engineer conducts quality inspection on a portion of the process steps: if the inspection fails, the exception handling process is executed; and if it succeeds, the process continues.
5) Priority node: each subbranch is executed sequentially according to priority: if the previous subbranch fails, the next one is executed; and if any branch is successfully executed, it passes.
6) Reactive priority node: its function is the same as that of the priority node, but the trigger condition will be continuously checked.
7) If-then-else node: the trigger expression is checked: the true branch is executed if it is true; and the false branch is executed if it is false.
8) Switch node: the trigger expression is checked, and different branches are executed according to different conditions: the default branch is executed if no condition is satisfied.

Normally, the sequence node and parallel node can drive most of the logics in the workflow.

### 3. Condition (C) nodes

Condition nodes are usually the basic logical elements in the behavior tree that check expressions, and are configured to perform conditional judgments and return judgment results. It returns OK or FAILED on the basis of whether the conditions are met. The condition nodes never return the running state.

In addition, in other implementations, the condition nodes may be included within the function block nodes. Alternatively, the condition nodes may be treated as a separate type of nodes.

### II. Function block (FB) nodes

Function block nodes are configured to execute commands and implement service operations in the workflow. Normally, if the operation is completed correctly, it returns OK; and if the operation fails, it returns FAILED. If the operation is in progress, it returns running.

In this embodiment, the function block nodes include logic nodes, and may also include some or all of some specific types of function block nodes, such as manual nodes, dynamic nodes, delay nodes and empty (idle) nodes. The dynamic nodes are configured to dynamically inject node instances at a runtime. The manual nodes represent that a manual step stops at a current node before obtaining a confirmation signal and exits after obtaining the confirmation signal. The delay nodes represent that it exits a current node after delay of specific time. The empty (idle) nodes represent that no operation is performed and a placeholder can be replaced by any function block node. Each logic node may correspond to an operation template, and each operation template pre-defines operations that can be performed by at least one type of resources (such as cooperative robots or PLC devices). For example, the operations may include actions, methods or skills.

In a specific implementation, each operation template may be composed of an interface part and an implementation part. The implementation part may be an application program (such as a containerized application program), which includes function codes and running dependencies. This application program can run independently, and is publicly available through a specific network communication interface. The interface part may be a logic node presented in graphical elements, which, like other behavior tree nodes, can be dragged, connected, and configured in the graphical user interface. In a specific implementation, each logic node may have a parameter panel for configuring the parameters of the logic node, such as input and output parameters. Of course, these input and output parameters may also be preset with default values.

Each logic node may be configured and executed separately. In execution of a logic node in the behavior tree, an input configured by the user for the logic node will be read and transmitted to the implementation part of the operation template, that is, the corresponding application program. After completion of a specific operation such as model transformation, an operation result such as the transformed model will be transformed back into an output of the logical node.

In this embodiment, the interface part and implementation part of each operation template may be stored separately. For example, the node library may only store the interface part, that is, the logic nodes, and the implementation part may be stored in a node service module, which may be referred to as a runtime in this embodiment. The node service module may be located on a server or locally.

Optionally, the above logic nodes follow the information model of runtime interaction with the main controller. In this way, standardization of communication between OT domain workflows and the main controllers of various OT devices is achieved.

In addition, considering that the service operations corresponding to a function block node may be executed by different subjects, such as specific physical devices, personnel, or other virtualized noun resources, for the convenience of description, these physical devices, personnel, virtualized noun resources and the like are collectively referred to as resources herein. These resources usually refer to resources that can execute workflows on site as operating subjects.

In a specific implementation, the resources that serve as the execution subjects of the operations can be used as a common configuration parameter of a function block node for the corresponding resource configurations of the required function block nodes in construction of the behavior tree. Alternatively, in construction of the function block nodes, the resources that serve as the execution subjects of the operations may be configured for the function block nodes, so that in construction of the behavior tree, there is no need to configure resources for the required function block nodes.

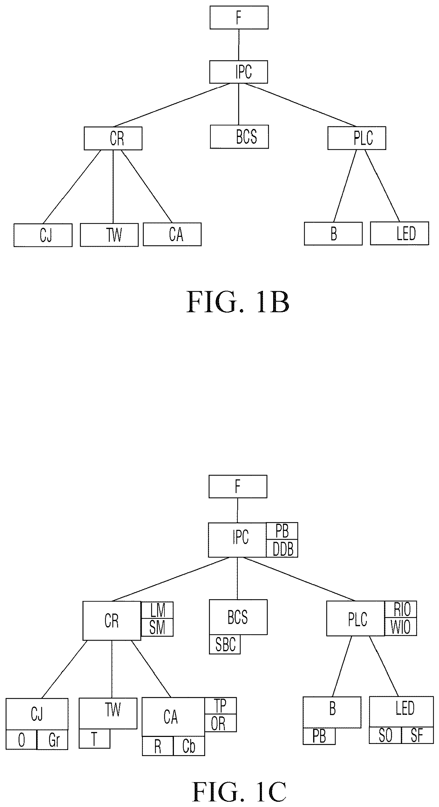

Yet alternatively, for the convenience of resource management, these resources may also be represented in the form of resource nodes, and these resource nodes may be stored in the form of a resource knowledge map. The resource knowledge map includes resource nodes and connection representing relationships between resource nodes. For example, FIG. 1B illustrates an exemplary diagram of a resource knowledge map in an example. As shown in FIG. 1B, this resource knowledge map is a factory resource knowledge map that describes the actual system configuration of a factory. The factory (F) node has an industrial personal computer (IPC) node. The industrial personal computer (IPC) node has a cooperative robot (CR) node, a PLC node, and a bar code scanner (BCS) node. The cooperative robot (CR) node has a clamping jaw (CJ) node, a torque wrench (TW) node, and a camera (CA) node. The PLC node has a button (B) node and an LED alarm lamp node. Of course, in some applications, there may be more than one device of a certain type, such as cooperative robot. The various devices of this type may be distinguished by their numbers or models and the like, which will not be repeated here.

Each function block node may be instantiated into an operation corresponding to a resource by associating the function block node with a resource node. For example, a certain logic node may be instantiated into an operation corresponding to a device by associating it with a device resource node. In a specific implementation, a resource header may be set for the function block node, and the resource associated with the function block node will be displayed in the resource header.

There are various ways to implement the specific association process. For example, each resource node may be pre-associated with a corresponding function block node, so that in construction of a behavior tree, the function block node associated with the corresponding resource can be directly pulled without the need for temporary configuration. For example, FIG. 1C illustrates an exemplary diagram of each resource node associated with a function block node in an example. As shown in FIG. 1C, aiming at the resources shown in the resource knowledge map in FIG. 1B, corresponding function block nodes are respectively associated. The industrial personal computer (IPC) node is associated with a press button (PB) node and a display dialog box on screen (DDB) node. The cooperative robot (CR) node is associated with a linear move (LM) node and a shutdown mobile (SM) node. The PLC node is associated with a read I/O (RIO) node and a write I/O (WIO) node. The bar code scanner (BCS) node is associated with a scan bar code (SBC) node. The clamping jaw (CJ) node is associated with an open (O) node and a grab (Gr) node. The torque wrench (TW) node is associated with a twist (T) node. The camera (CA) node is associated with a register (R) node, a calibration (Cb) node, a take photo (TP) node, and an object recognition (OR) node. The button (B) node is associated with a press button (PB,) node. The LED alarm lamp node is associated with a switch on (SO) node and a switch off (SF) node.

Alternatively, no resource node is pre-associated with the function block node, but a corresponding resource node is associated with the required function block node in construction of a behavior tree.

Yet alternatively, there may also be function block nodes (referred to as dedicated function block nodes) that are pre-associated with resource nodes and function block nodes (referred to as general function block nodes) that are not associated with resource nodes simultaneously. Although the general function block node is not associated with the on-site resource, it does not affect the analog simulation of the workflow corresponding to the behavior tree that includes the function block node. For example, if a certain cooperative robot has not been purchased yet, in order to verify its feasibility, corresponding general function block nodes may be employed for simulation in advance. After it is determined that the robot has feasibility, it is to be purchased.

In addition, this embodiment may further include the following decorator nodes.

### III. Decorator nodes

Decorator nodes are mainly configured to decorate function block nodes driven by logic control nodes. For example, they can be configured to determine whether branches or even individual nodes in the behavior tree can be executed. The decorator nodes may include some or all of a repeat (Rp) node, a retry (Rt) node, a one-shot (OS) node, a timeout (TO) node, a timer (Tm) node, an inverter (Iv) node, a force run (FR) node, a force OK (FO) node, a force failed (FF) node, and a guard (G) node. Each decorator node will be described below in brief:
1) Inverter node: it may have one subnode and is configured to inverse the subnode. If the subnode fails, OK is returned. If the subnode succeeds, FAILED is returned.
2) Force OK node: it may have one subnode (such as a function block node). No matter whether its subnode succeeds, OK is always returned by this node.
3) Force failed node: it may have one subnode (such as a function block node). No matter whether its subnode succeeds, FAILED is always returned by this node.
4) Repeat node: it may have one subnode (such as a function block node), and can repeat the execution of its subnode for fixed times.
5) Retry node: it may have one subnode (such as a function block node), and can trigger its subnode for N times at most. If its subnode returns FAILED, retry is performed and the times decrease by one. If the retry times are zero, OK is returned. If the subnode returns OK, the cycle is interrupted and OK is also returned. N is a positive integer.
6) One-shot node: it may have one subnode, which represents that its subnode is executed once in the workflow, and is not executed any longer before the workflow is enabled again.
7) Timeout node: it may have one subnode and is configured to count the execution time of its subnode (such as a function block node). When the execution time exceeds specified time, execution exits (even though it is not executed completely).
8) Timer node: it may have one subnode. After the specified time is reached, its subnode (such as a function block node) is executed.
9) Force run node: it may have one subnode. No matter whether its subnode (such as a function block node) is executed completely, a running state is forced to be returned.
10) Guard node: it may have at least one subnode, and is configured to monitor the state of all its subnodes. When any subnode is executed incorrectly, ERROR is reported. When all subnodes are normal, NORMAL is returned.

In other implementations, the decorator nodes may also be included within the flow control nodes. That is, the flow control nodes may include some or all of main control nodes, logic control nodes and decorator nodes.

In this embodiment, each behavior tree node may be listed in the form of an icon on the graphical user interface. The user may determine the nodes required to construct the workflow by selecting and dragging the icons to add to the canvas. Further, the nodes may also be configured with necessary parameters, such as resource allocation and/or input/output parameters. If a workcell needs to execute more than one operation defined in the required workflow, the behavior tree corresponding to the workflow may include multiple function block nodes. According to the sequence of and mutual relationship between the operations, corresponding flow control nodes may be set, and the behavior tree corresponding to the workflow may be finally generated by performing corresponding arrangement and connection on the dragged nodes. That is, the behavior tree construction operation includes the operations of adding and connecting behavior tree nodes. Further, it may also include the operation of associating resources with the added function block nodes. In addition, it may further include the operation of configuring the input/output parameters for the behavior tree nodes.

In step S12A, a behavior tree corresponding to a workflow is generated in response to the behavior tree construction operation. Some or all of the function block nodes in the behavior tree are associated with resources that execute corresponding service operations.

Normally, for the workflow that requires implementation by on-site resources, all function block nodes in the behavior tree need to be associated with resources that execute corresponding service operations. For the workflow that does not currently require implementation by on-side resources, such as the workflow for analog simulation, it is not necessary to associate all function block nodes with resources that execute corresponding service operations. For example, if a certain cooperative robot has not been purchased yet, in order to verify its feasibility, corresponding general function block nodes may be employed for simulation in advance. After it is determined that the robot has feasibility, it is to be purchased.

In this embodiment, each behavior tree node may be instantiated in response to the behavior tree construction operation, and the connection relationships between the instantiated behavior tree nodes may be established. Some or all of the instantiated function block nodes are associated with resources that execute corresponding service operations. By performing this step, the added function block nodes can be instantiated into operations corresponding to resources. Then, on the basis of the connection relationships between the instantiated behavior tree nodes, a behavior tree corresponding to a workflow is generated.

In a specific implementation, the above behavior tree nodes may be stored in a node library. In addition, for similar application scenarios, in order to avoid the waste of manpower, time and the like in repeatedly constructing behavior trees, the constructed behavior tree (or uninitialized behavior tree framework) corresponding to the workflow or subworkflow that preferably has been debugged or successfully run by the user is stored as a workflow node or subworkflow node. Correspondingly, the node library may further include workflow (WF) nodes and subworkflow (SWF) nodes. When the user needs to construct a similar behavior tree or a behavior tree that includes the workflow or subworkflow, the user may select the corresponding workflow nodes or subworkflow nodes and configure them as necessary to obtain the behavior tree configured to implement the required workflow.

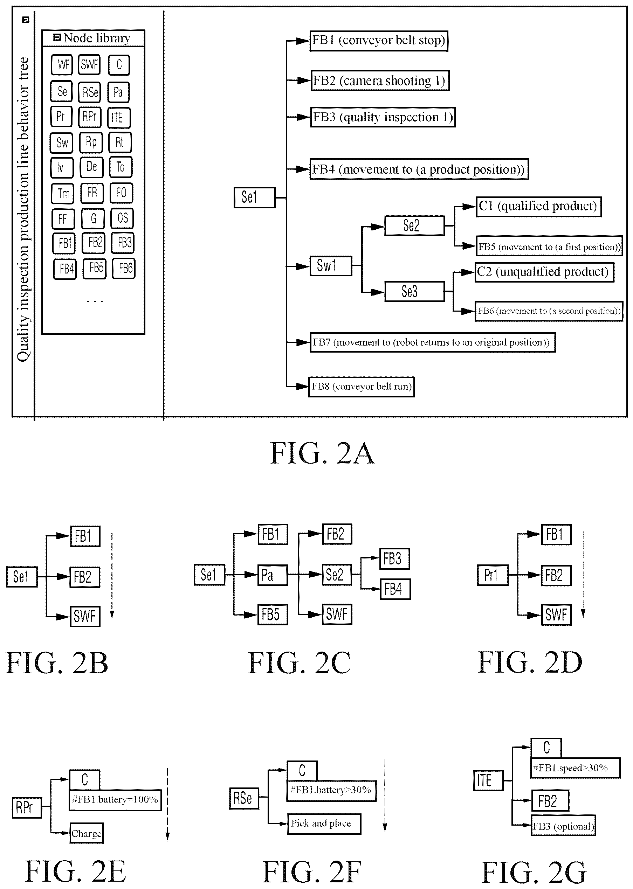

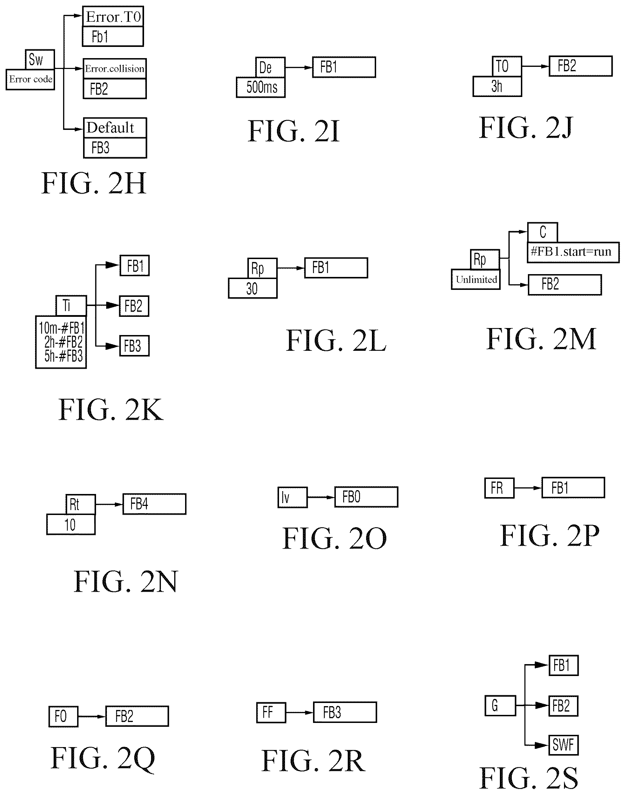

FIG. 2A illustrates a schematic diagram of a behavior tree of quality inspection production line workcells constructed in an example. FIG. 2B to FIG. 2S respectively illustrate schematic diagrams of partial behavior trees constructed in an example. The direction of the arrow indicates the execution sequence of the corresponding nodes.

In the construction of the behavior tree characterizing the workflow mentioned above, the function block nodes may be understood as presented in the form of a labeled diagram, and the construction of this behavior tree on the basis of the function block labeled diagram requires the participation of flow control nodes and even decorator nodes. In addition, the embodiments of the present disclosure further provide a behavior tree constructing method on the basis of a function block typed diagram, in which the function block nodes are presented in the form of a typed diagram. In practical applications, these two behavior tree constructing methods may coexist, and when one method is employed for constructing the behavior tree, the other method is also employed for synchronous construction. For example, when two function block nodes are connected in sequence on the basis of the function block typed diagram and when a behavior tree on the basis of the function block labeled diagram is synchronously constructed, a sequence node will be automatically added, and the two function block nodes will be added for that sequence node from top to bottom.

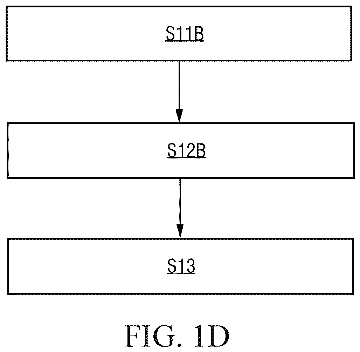

FIG. 1D illustrates an exemplary flowchart of another workflow constructing and monitoring method according to embodiments of this application. As shown in FIG. 1D, the method may include the following steps:
In step S11B, a behavior tree construction operation performed by a user on a graphical user interface is received. The behavior tree construction operation includes operations of adding and connecting function block nodes on the basis of a function block typed diagram. In this application, the typed diagram and labeled diagram can be understood as two presentation methods of the same function block node, both of which are used for implementing a corresponding service operation.

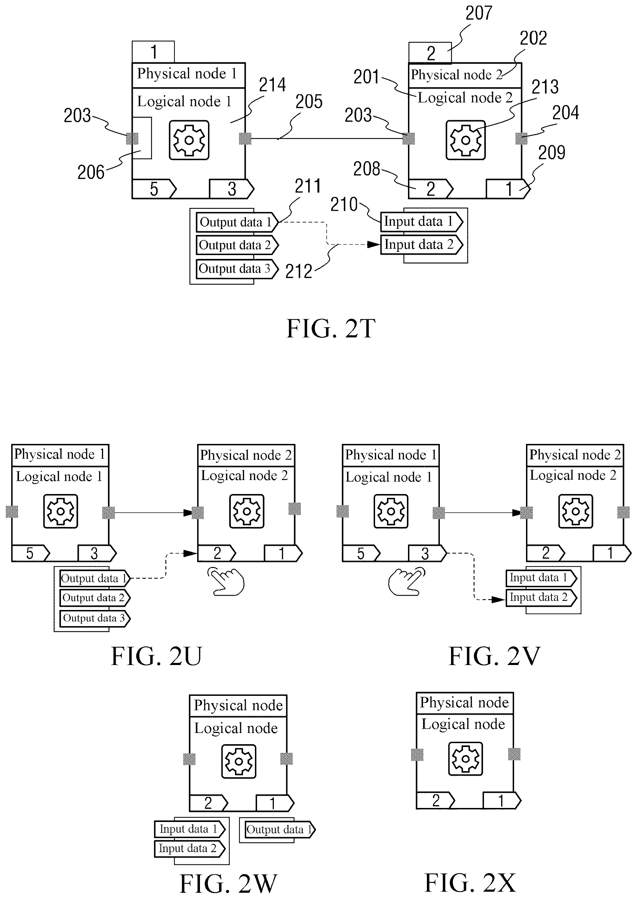

FIG. 2T illustrates an example of constructing a behavior tree on the basis of function block nodes of a function block typed diagram. In this example, two function block nodes F1 and F2 are shown. As shown in FIG. 2T, the function block typed diagram may include:
1) A function block name 201 for indicating type of service operation, such as screw fastening, image acquisition, video recording, and machine vision guide. In a specific implementation, when the function block nodes are dragged from the node library to the canvas, the default function block names will be generated by adding the instance numbers to the default names defined by the function blocks. In FIG. 2U, taking the logic nodes of the function block nodes as an example, the names are represented by "logic node 1" and "logic node 2". The function block names are editable, but should be unique in the current global workflow.
2) A function block header 202 for indicating resource for executing service operations, such as a torque wrench as a resource for executing screw fastening, a monitor as a resource for executing image acquisition, a monitor as a resource for executing video recording, and a camera as a resource for executing machine vision guide. Normally, the function block header 202 of each logic node is typically a physical resource, such as "physical node 1" and "physical node 2" in FIG. 2U. As mentioned above, the resource indicated by the function block header 202 may be pre-associated or associated correspondingly through resource configuration after addition of the function block node.
3) A link input port 203 and link output port 204 for triggering link connection. In this embodiment, the connection operation of the function block nodes may include a connection operation between the link output port 204 and the link input port 203 between the two function block nodes F1 and F2. Through the connection operation, a link connection 205 is established between the two function block nodes F1 and F2. In this example, the link connection 205 is a unidirectional connection for indicating the running process of the workflow. For example, it can indicate the execution sequence of the two function block nodes, that is, the left function block node F1 is executed first and then the right function block node F2 is executed.

In a specific implementation, in order to avoid click errors and improve the sensitivity of connection between the function block nodes, there is a sensitive area 206 within the set range of the link input port 203, referred to as a first sensitive area here, which is configured to locate a connection endpoint on the link input port 203 when click and connection operations of the user are received within the first sensitive area. Similarly, there may also be a sensitive area (not shown) within the set range of the link output port 204, referred to as a second sensitive area here, which is configured to locate a connection endpoint on the link output port 204 when click and connection operations of the user are received within the second sensitive area.

In addition, in this embodiment, in response to the connection operation between the link output port 204 and the link input port 203 between the two function block nodes F1 and F2, an instruction label 207 indicating the execution sequence of the function block nodes may be further generated for the function block nodes F1 and F2 connected with each other, and the instruction label 207 may be marked on the function block typed diagram of the function block nodes F1 and F2, such as 1 and 2 as shown. In addition, the instruction label 205 may also be used as an index for skip instructions and as a chapter index for instructional documents.

4) An input dataset block 208 for representing a set of all data input ports and output dataset block 209 for representing a set of all data output ports. In this embodiment, the number of the data input ports of the function block nodes may be marked on the input dataset block 208, such as 5 on the input dataset block 208 of the function block node F1 and 2 on the input dataset block 208 of the function block node F2. If the number of the data input ports is zero, the input dataset block 208 may be hidden. Similarly, the number of the data output ports of the function block nodes may be marked on the output dataset block 209, such as 3 on the output dataset block 209 of the function block node F1 and 1 on the output dataset block 209 of the function block node F2. If the number of the data output ports is zero, the output dataset block 209 may be hidden.

In this embodiment, as shown in FIG. 2U to FIG. 2X, each data input port of the function block nodes may be expanded or hidden by clicking on the input dataset block 208. Each data output port of the function block nodes may be expanded or hidden by clicking on the output dataset block 209. FIG. 2U illustrates a schematic diagram of hiding the data input port of the logic node 2 by clicking. FIG. 2V illustrates a schematic diagram of hiding the data output port of the logic node 1 by clicking. FIG. 2W illustrates a schematic diagram of simultaneously displaying each data input port and each data output port. FIG. 2X illustrates a schematic diagram of simultaneously hiding each data input port and each data output port.

5) A data input port 210 and data output port 211 for triggering data transmission. In this embodiment, the connection operation of the function block nodes may further include a connection operation between the data output port 211 and the data input port 210 between the corresponding data of the two function block nodes F1 and F2. Through the connection operation, a data connection 212 is established between the two function block nodes F1 and F2. In this example, the data connection 212 is used for indicating data transmission between the two function block nodes F1 and F2. As shown in FIG. 2U, a data connection 212 is established between the data output port 211 of the output data 1 of the function block node F1 and the data input port 210 of the input data 2 of the function block node F2, indicating that the output data 1 of the function block node F1 serves as the input data 2 of the function block node F2.

In a specific implementation, similar to the link input/output ports, in order to avoid click errors and improve the sensitivity of connection between the function block nodes, there is a sensitive area (not shown) within the set range of the data input port 210, referred to as a third sensitive area here, which is configured to locate a connection endpoint on the data input port 210 when click and connection operations of the user are received within the third sensitive area. Similarly, there may also be a sensitive area (not shown) within the set range of the data output port 211, referred to as a fourth sensitive area here, which is configured to locate a connection endpoint on the data output port 211 when click and connection operations of the user are received within the fourth sensitive area.

6) A function block icon 213. Specifically, the function block icon 213 may be a vector icon 213, which is used for visually representing the service operations of the function block node. Of course, in other implementations, the function block icon 213 may also be omitted.

7) A function block main body 214 for carrying each component described above. In this embodiment, the addition operation of the function block nodes may include a dragging operation of the function block main body 214.

In step S12B, a behavior tree corresponding to a workflow is constructed in response to the behavior tree construction operation, such as the addition and connection operation of the function block nodes on the basis of the form of a typed diagram.

In this step, in response to the addition and connection operation of the function block nodes on the basis of the form of a typed diagram, a behavior tree including flow control nodes and function block nodes on the basis of a function block labeled diagram in S 12A may be synchronously constructed. Similarly, in step S12A, in construction of a behavior tree that includes flow control nodes and function block nodes on the basis of a function block labeled diagram, a behavior tree on the basis of the function block typed diagram in S 12B may also be synchronously constructed. In addition, these two behavior tree construction interfaces may be switched according to the selection of the user. For example, the behavior tree on the basis of the function block typed diagram or the behavior tree on the basis of the function block labeled diagram may be switched to display according to the user's click operation on the behavior tree on the basis of the function block typed diagram or the behavior tree on the basis of the function block labeled diagram.

Further, in other implementations, no matter whether a behavior tree is constructed on the basis of the function block node in the form of a typed diagram or function block nodes in the form of a labeled diagram, at least one data block can be further added and connected for each function block node of at least one function block node in the behavior tree. Each data block is configured to present corresponding data in the service operation of the function block node connected thereto. The type of the data block may include some or all of data pair, datasheet, image, video and chart.

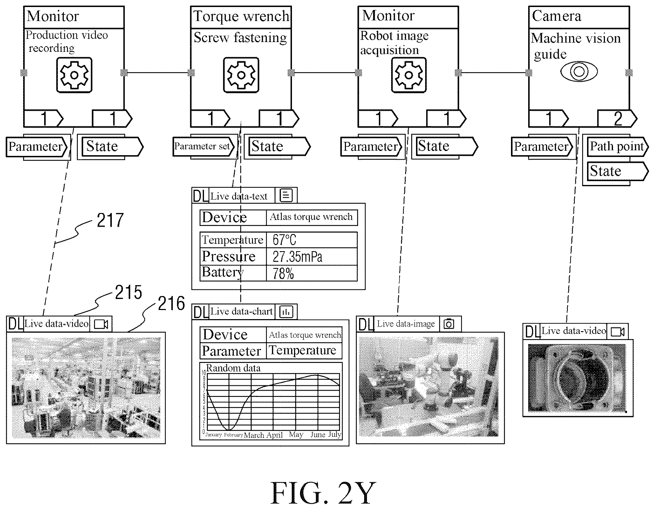

FIG. 2Y illustrates a schematic diagram of respectively adding data blocks for four function block nodes in a behavior tree and displaying corresponding data in each data block in an example of this application. In this example, taking the behavior tree construction interface on the basis of the function block typed diagram as an example, as shown in FIG. 2Y, in this example, the function block node associated with a monitor for video recording is added with a data block of a type live data-video. The function block node associated with a torque wrench for screw tightening is added with a data block of a type live data-text and a data block of a type live data-chart. The function block node associated with a monitor for robot image acquisition is added with a data block of a type live data-image. The function block node associated with a camera for machine vision guide is added with a data block of a type live data-video.

As shown in FIG. 2Y, each data block may include a data block label 215 for indicating the type of the data block and a data block body 216 with a display area for presenting specific data. The data block label 215 may be a draggable label that can be moved to any position on the canvas, for example. The size of the display area of the data block body 216 is adjustable, which is configured to display different types of data from a data layer in real time. A monitoring link 217 is established between each data block and its corresponding function block node, and one function block may be mapped to multiple data blocks. When the workflow is executed, for example, in a runtime, the monitoring and output data corresponding to the function block node will be transmitted to the corresponding data block for live display.

In this embodiment, the data block is a low code data block, which differs from other SCADA and dashboard systems in that the low code data block in this embodiment is also a low code element, which can be used as a part of the behavior tree and whose attributes can be all managed in a low code logic.

A data source in the low code data block comes from the data layer, which can obtain data through an interface provided by the data layer in a runtime or a cloud execution engine. The data source may be a time series database, an RDBMS, or a NoSQL. The low code data block is a flexible, scalable and adaptable system that can be applied to any function block node that can be associated with a physical device. In short, the data block for achieving data monitoring can be considered as a visual interface of the data layer.

In addition, in other implementations, as shown in FIG. 1A and FIG. 1B, this embodiment may further include the following step S13.

In step S13, the behavior tree is parsed, and the workflow corresponding to the behavior tree is deployed to a runtime of a corresponding workcell so that the runtime executes the workflow to control each resource in the workcell to execute the service operation according to the workflow. For the behavior tree connected with data blocks, the corresponding data obtained in an execution process of the service operation may be further provided by the runtime to the corresponding data block for display. In a specific implementation, the runtime can directly provide the corresponding data obtained in the execution process of the service operation to the corresponding data block for display, or provide it to the corresponding data block through a third-party device for display.

In a specific implementation, the workcell may have a main controller. In this case, the runtime may be located on the main controller of the workcell. Correspondingly, device resources of the resources may be connected to the main controller, which controls the connected device resources connected thereto to execute corresponding service operations according to the workflow of the runtime. Human resources and other resources of the resources may directly execute corresponding operations according to workflow prompts of the runtime.

In this embodiment, the behavior tree may be stored in a markup language such as XML (extensible markup language) and may be validated by an XML Schema (XSD) prototype to verify whether the XML format of the behavior tree is correct. After parsing the behavior tree, a workflow represented in the form of "node link assembly" can be obtained. Then, the workflow can be compiled and downloaded to the runtime of the main controller of the corresponding workcell.

In addition, according to Gartner's definition, the OT domain typically refers to operational technology (OT), which combines hardware and software to detect or trigger changes in processes or events occurring within an enterprise by directly monitoring and/or controlling physical devices (referred to as OT devices). OT utilizes computers to monitor or change the physical state of an industrial control system (ICS). The industrial control system is configured to remotely monitor and/or control critical industrial processes on the basis of facilities, systems and devices implemented by computers, thus achieving physical functions. The term "OT" is used for distinguishing the industrial control system from traditional information technology (IT) systems in terms of technical implementation and functionality.

At present, there are many IT low code development tools or platforms on the market. Some tools are designed for use scenarios of the internet of things, targeting experienced IT engineers, while OT engineers and junior IT engineers find it difficult to understand their paradigms. However, some tools are more suitable for low code development scenarios in the IT domain, and may not be well suited for the OT domain.

In this embodiment, the above workflow constructing and monitoring method can be used for this OT domain as a low code development method for the OT domain. Specifically, the workflow constructing and monitoring method shown in FIG. 1A may be implemented on the OT domain, such as an OT domain low code development platform. Correspondingly, the workflow may be an OT domain workflow. The workcell may a workcell in the OT domain. The device may be an OT device. Here, the OT device may include but is not limited to internet of things (IoT) devices, programmable logic controllers (PLCs), robotics, manual processes and industrial personal computers (IPCs).

In addition, in the embodiments of this application, considering that the fusion of the IT domain and the OT domain is becoming increasingly important in the process of enterprise digital transformation at present, in order to fuse the IT domain and the OT domain into an ITOT system, an urgent problem that needs to be solved at present is how enterprises can collect OT domain data and control OT domain processes in a way that is easy to understand, instead of IT domain programming.

In this embodiment, the above workflow constructing and monitoring method can be used for this ITOT system as an OT domain (which can be fused with the IT domain) low code development method. Similarly, the workflow constructing and monitoring method shown in FIG. 1A may be implemented on the OT domain, such as an OT domain low code development platform. Correspondingly, the workflow may be an OT domain workflow. The workcell may be a workcell in the OT domain.

In addition, in order to achieve the fusion of the IT domain and the OT domain, on the basis of the workflow constructing and monitoring method shown in FIG. 1A, it further includes generating a microservice on the basis of the behavior tree, so that an IT device triggers the runtime of the main controller of the workcell to execute the OT domain workflow by calling the microservice. In a specific implementation, the IT device can call the microservice directly or through a knowledge middle platform. Correspondingly, in this embodiment, the runtime can provide the corresponding data obtained in the execution process of the service operation to the corresponding data block for display through the microservice. Alternatively, the runtime can provide the corresponding data obtained in the execution process of the service operation to a knowledge middle platform, and the knowledge middle platform performs processing including filtering on the data, and then provides the data to the corresponding data block for display directly or through the microservice.

When generating a microservice on the basis of the behavior tree, an API for the microservice may be generated on the basis of the behavior tree. The processing process in the API includes various operations in the OT domain workflow. The input parameters of the API are obtained from the input port of the OT domain workflow, and the output parameters of the API are obtained from the output port of the OT domain workflow.

To enable the IT domain to call the microservice, it is required that the IT domain can obtain the information about the microservice. Specific implementation methods include but are not limited to the following two:

### Method I.

In Method I, the code developer of the OT domain may notify the code developer of the IT domain of the names and IP addresses of the generated microservices. In this way, the code developer of the IT domain can directly write the information of each microservice into the code in the development process, thus enabling the IT devices to call the microservice. Method I is more suitable for scenarios with a small number of microservices.

### Method II.

In Method II, registration and discovery mechanisms may be employed. That is, the various microservices are registered on the knowledge middle platform, so that an IT domain code development tool achieves the effect that the IT device discovers the connected microservices through the knowledge middle platform. In a specific implementation, an IT domain code development tool may be used for achieving the effect that the IT domain device discovers the connected microservices through the knowledge middle platform through code development. The device that completes the microservice registration may be an OT domain microservice generator or a third-party device. The third-party device may be considered as part of the OT domain low code development platform, or may be implemented in the knowledge middle platform. Method II is more suitable for scenarios with a large number of microservices.

In this embodiment, the IT device may include but is not limited to manufacturing operation management (MOM) systems, manufacturing execution systems (MESs), enterprise resource planning (ERP)systems, enterprise service buses (ERPs) and product lifecycle management (PLM)systems.

In this embodiment, the IT domain code development tool can achieve the effect that the IT device calls the microservices through a knowledge middle platform to trigger the runtime of the main controller of the workcell to execute the OT domain workflow through programming, thus achieving the control of the OT domain process by the IT domain code development platform, that is, achieving the fusion of the IT domain and the OT domain. Here, the microservices are automatically generated by the OT domain microservice generator on the basis of the OT domain behavior tree, which does not require the IT domain code development tool to understand the details of the OT domain workflow but obtain the identifications (such as names) of the microservices and IP addresses, and does not require the development personnel of the IT domain to know the OT domain device and the control process, so that it is easy to implement and understand.

The applicable fields of the embodiments of this application include but are not limited to industrial automation, logistics, laboratory, maritime, smart grid, electric vehicle infrastructure, electric vehicles, building automation, smart city, water treatment, garbage recycling and smart farm.

The above provides a detailed description of the workflow constructing and monitoring method in the embodiments of this application. Below is a detailed description of a workflow constructing and monitoring system in the embodiments of this application. The workflow constructing and monitoring system in the embodiments of this application can be configured to implement the workflow constructing and monitoring method in the embodiments of this application. For details not disclosed at length in the system embodiment of the present disclosure, refer to the corresponding description in the method embodiment of the present disclosure, which will not be repeated here.

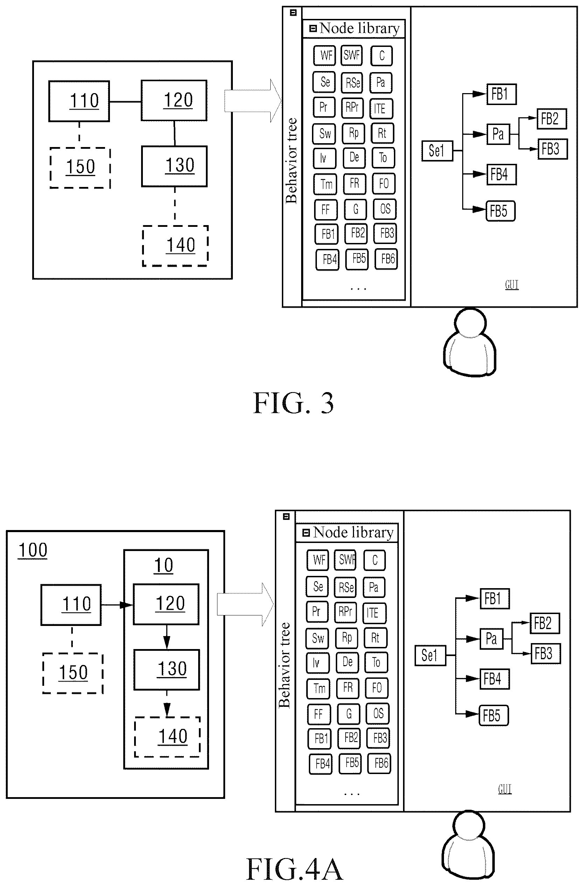

FIG 3 illustrates a schematic structural diagram of a workflow constructing and monitoring system according to embodiments of this application. As shown in FIG. 3, the system may include a node library 110, a graphical interface module 120 and an edit processing module 130.

The node library 110 is configured with behavior tree nodes for constructing behavior trees. The behavior tree nodes include flow control nodes and function block nodes. A behavior tree is configured to characterize a workflow that defines operations to be performed by a workcell. The flow control nodes are configured to implement logic controls in workflows. The function block nodes are configured to implement service operations in the workflows. The function block nodes may include logic nodes. Each logic node corresponds to an operation template. Each operation template pre-defines operations that can be performed by at least one type of resources such as devices. The operations may include actions, methods or skills. In addition, the node library 110 may further include various types of data blocks. Each data block is configured to present corresponding data in the service operation of the function block node connected thereto. The type of the data block includes some or all of data types such as data pair, datasheet, image, video and chart.

In an implementation, the resources are represented in the form of resource nodes, and all resource nodes are associated and stored in the form of a resource knowledge map. The resource knowledge map includes resource nodes and connection representing relationships between resource nodes. Correspondingly, in this embodiment, as shown by the dashed line in the figure, it may further include a resource library 150 for storing various resources in the form of the resource knowledge map. Each resource can execute at least one service operation.

In an implementation, the flow control nodes may include some or all of main control nodes, logic control nodes and condition nodes. The main control nodes may include some or all of a start node, an end node, a goto node, an anchor node, a stop node and an abort node. The logic control nodes include some or all of a sequence node, a reactive sequence node, a parallel node, an in-process QC node, a priority node, a reactive priority node, an if-then-else node and a switch node.

In an implementation, the function block nodes may further include some or all of manual nodes, dynamic nodes, delay nodes and empty nodes.

In an implementation, the behavior tree nodes further include decorator nodes, which may include some or all of a repeat node, a retry node, a one-shot node, a timeout node, a timer node, an inverter node, a force run node, a force OK node, a force failed node, and a guard node.

In an implementation, some or all of the function block nodes in the node library 110 are respectively bound to resources that execute service operations corresponding to the function block nodes.

In addition, in another implementation, the function block nodes in the node library 110 may be presented in the form of a labeled diagram as shown in FIG. 2A to FIG. 2T, or in the form of a typed diagram as shown in FIG. 2T to FIG. 2X. Of course, in other implementations, the function block nodes in the node library 110 may also be presented only in the form of a typed diagram. For the specific structures of the function block nodes in the form of a function block typed diagram, see FIG. 2T, which will not be repeated here.

The graphical interface module 120 is configured to provide a user a graphical user interface (GUI) for performing a behavior tree construction operation on the basis of the behavior tree nodes in the node library 110. In addition, the graphical user interface (GUI) may also allow for addition and connection operations of data blocks.

In a specific implementation, the graphical user interface may include a first graphical user interface for constructing a behavior tree on the basis of the flow control nodes and the function block nodes in the form of a function block labeled diagram, and a second graphical user interface for constructing a behavior tree on the basis of the function block nodes in the form of a function block typed diagram. The two graphical user interfaces may be switched to display according to the selection of the user. The behavior tree construction operation includes the addition and connection operations of the function block nodes. On the second graphical user interface, the addition operation of the function block nodes may include a dragging operation of the function block main body. The connection operation of the function block nodes may include a connection operation between the link output port and the link input port between the two function block nodes, and a connection operation between the data output port and the data input port between the corresponding data of the two function block nodes.

Each behavior tree node may be listed in the form of an icon on the graphical user interface (GUI).

The edit processing module 130 is configured to construct a behavior tree corresponding to a workflow in response to the behavior tree construction operation. In addition, the edit processing module 130 is further configured to add and connect at least one data block to each function block node of at least one function block node in the behavior tree in response to the data block addition and connection operations.

In a specific implementation, in an implementation, the edit processing module 130 may instantiate each behavior tree node in response to the behavior tree construction operation, and establish connection relationships between the instantiated behavior tree nodes. On the basis of the connection relationships between the instantiated behavior tree nodes, a behavior tree corresponding to a workflow is generated. Some or all of the instantiated function block nodes are associated with resources that execute corresponding service operations. For example, a logic node may be instantiated into an operation corresponding to a resource (such as a device).

In this embodiment, each behavior tree node and each data block may be listed in the form of icons on the graphical user interface. The user may determine the nodes required to construct the workflow by selecting and dragging the icons to add to the canvas. Further, the nodes may also be configured with necessary parameters, such as resource allocation and/or input/output parameters.

If a workcell needs to execute more than one service operation defined in the required workflow, the behavior tree corresponding to the workflow may include multiple logic nodes. According to the sequence of and mutual relationship between the operations, the execution sequence of the logic nodes is determined, and the behavior tree corresponding to the workflow is finally generated by performing corresponding arrangement and connection on the dragged nodes.

In an implementation, the behavior tree construction operation may further include the operation of associating resources with the added function block nodes.

Corresponding to the method shown in FIG. 1A, the workflow constructing and monitoring system in this embodiment may further include a parsing and deployment module 140 configured to parse the behavior tree, and deploy the workflow corresponding to the behavior tree to a runtime of a corresponding workcell so that the runtime executes the workflow to control each resource in the workcell to execute the service operation according to the workflow. Further, it may provide the corresponding data obtained in the execution process of the service operation to the corresponding data block for display. Specifically, the workcell may have a main controller. In this case, the runtime may be located on the main controller of the workcell. Correspondingly, device resources of the resources may be connected to the main controller, which controls the device resources connected thereto to execute corresponding operations according to the workflow of the runtime. Human resources and other resources of the resources may directly execute corresponding operations according to workflow prompts of the runtime.

FIG. 4A illustrates an OT domain low code development platform 100 provided according to embodiments of this application. The platform 100 can be configured to implement the workflow constructing and monitoring system shown in FIG. 3.

As described above, there is currently no low code development tool and platform suitable for the OT domain. In the platform 100 shown in FIG. 4A, since the operation templates for various OT devices to execute operations are predefined (which may be regarded as providing the ability of the OT domain), the corresponding logic nodes are constructed on the basis of the operation templates, and other behavior tree nodes for constructing the OT domain workflow are set, it is convenient and fast to construct the behavior tree corresponding to the OT domain workflow, thus achieving low code development suitable for the OT domain. Development engineers do not need to have a deep understanding of various OT devices to achieve OT domain development.

Specifically, as shown in FIG. 4A, the OT domain low code development platform 100 may include:
an OT domain low code development tool 10. The OT domain low code development tool 10 may be configured to implement the graphical interface module 120 and edit processing module 130 in the workflow constructing and monitoring system shown in FIG. 3. Further, it can also implement the parsing and deployment module 140 in the workflow constructing and monitoring system shown in FIG. 3. The node library 110 and the resource library 150 in the workflow constructing and monitoring system shown in FIG. 3 may be stored on a memory.

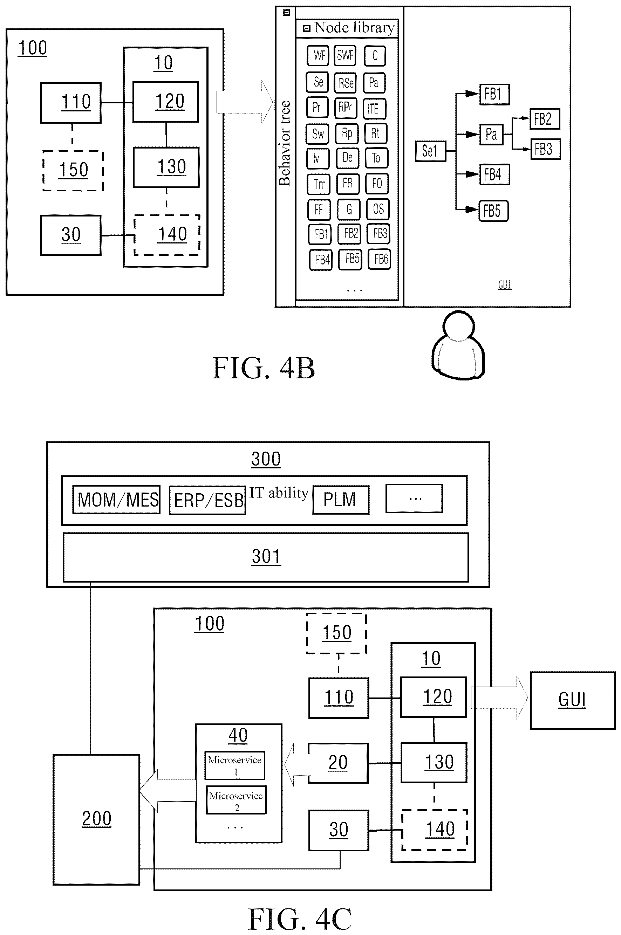

Further, as shown in FIG. 4B, the OT domain low code development platform 100 may further include a runtime 30 of the workcell. The OT domain low code development tool 10 may deploy the OT domain workflow corresponding to the generated behavior tree to the runtime 30 of the workcell so that the runtime 30 executes the workflow to control each OT resource such as an OT device in the workcell to execute the operation according to the OT domain workflow.

The components of the OT domain low code development platform 100 shown in FIG. 4A and FIG. 4B only involve the OT domain. However, the fusion of the IT domain and the OT domain has become increasingly important for enterprise digital transformation. What needs to be achieved is how enterprises can adopt an easy-to-understand and non-IT-programming approach to control the process of the OT domain. The OT domain low code development platform 100 shown in FIG. 4C solves how to control the process of the OT domain through an IT domain code development platform 300. As shown in FIG. 4C, on the basis of the structure shown in FIG. 4B, the OT domain low code development platform 100 may further include an OT domain microservice generator 20, which can generate microservices 40 on the basis of the OT domain behavior tree. In this way, the IT domain code development tool 301 can achieve the effect that the IT device calls the microservices 40 through a knowledge middle platform 200 to trigger the runtime 30 of the main controller of the workcell to execute the OT domain workflow through programming, thus achieving the control of the OT domain process by the IT domain code development platform 300, that is, achieving the fusion of the IT domain and the OT domain. Here, the microservices 40 are automatically generated by the OT domain microservice generator 20 on the basis of the OT domain behavior tree, which does not require the IT domain code development tool 301 to understand the details of the OT domain workflow but obtain the identifications (such as names) of the microservices 40 and IP addresses, and does not require the development personnel of the IT domain to know the OT domain device and the control process, so that it is easy to implement and understand.

To enable the IT domain to call the microservices 40, it is required that the IT domains can obtain the information about the microservices 40. Corresponding to the method shown in FIG. 1A, the implementation methods include but are not limited to the following two:

### Method I.

In Method I, the code developer of the OT domain may notify the code developer of the IT domain of the names and IP addresses of the generated microservices 40. In this way, the code developer of the IT domain can directly write the information of each micro service 40 into the code in the development process, thus enabling the IT devices to call the microservices 40. Method I is more suitable for scenarios with a small number of microservices.

### Method II.

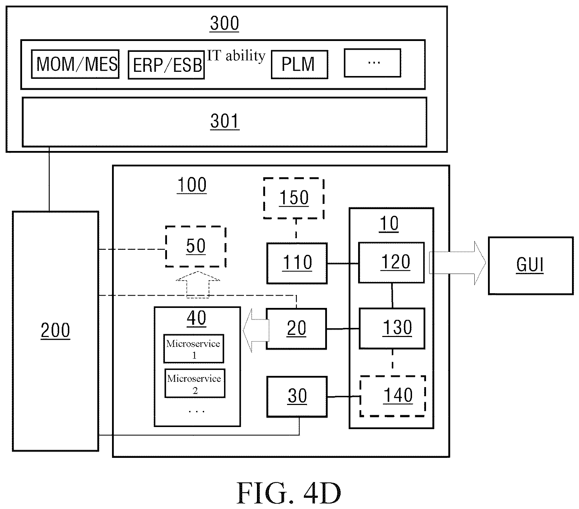

In Method II, registration and discovery mechanisms may be employed. The various microservices 40 are registered on the knowledge middle platform 200, so that an IT domain code development tool 301 can achieve the effect that the IT domain device discovers the connected microservices 40 through the knowledge middle platform 200 through code development. The device that completes the microservice 40 registration may be an OT domain microservice generator 20 or a third-party device 50 shown in FIG. 4D. The third-party device 50 may be considered as part of the OT domain low code development platform 100, or may be implemented in the knowledge middle platform 200. Method II is more suitable for scenarios with a large number of microservices. By registering the microservices on the knowledge middle platform, the effect that the IT devices call the microservices can be more effectively achieved, and the fusion of the OT domain and the IT domain is strengthened.

Optionally, the OT domain microservice generator 20 may generate an API for the microservices 40 on the basis of the OT domain behavior tree. The processing process in the API includes various operations on each function block in the OT domain workflow. The input parameters of the API are obtained from the input port of the OT domain workflow, and the output parameters of the API are obtained from the output port of the OT domain workflow.

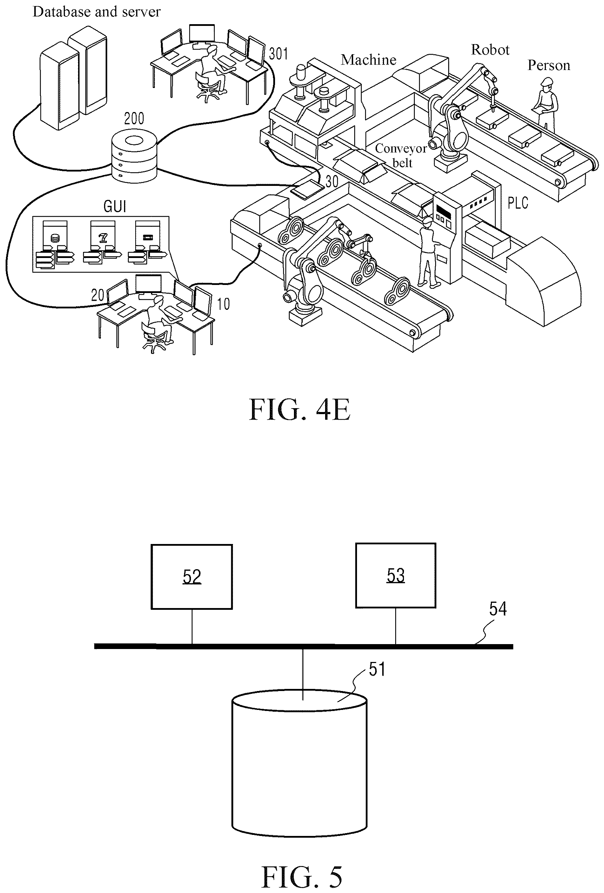

An application scenario of the OT domain low code development platform 100 provided in the embodiments of this application in the field of industrial automation is as shown in FIG. 4E. The low code development tool 10 generates a behavior tree corresponding to the OT domain workflow under the operation of the user. Further, each function block node of at least one function block node in the behavior tree may be added with at least one data block. The OT domain workflow defines the operations to be performed by the production line as a workcell shown on the right side of FIG. 4E. The corresponding workflow generated on the basis of the behavior tree is published to the runtime 30, so that the runtime 30 can control the completion of the operation of the production line of the workcell. In addition, monitoring data or output data in the operation process can be also obtained, and the obtained data can be provided to the data block of the graphical user interface of the low code development tool 10 for display. At the same time, on the basis of the behavior tree, the corresponding microservices can be generated by the microservice generator 20 and registered in the knowledge middle platform 200, so that the IT domain code development tool 301 can call the corresponding microservices through the knowledge middle platform 200. In addition, the monitoring data or output data can be provided to the knowledge middle platform 200 for processing including filtering, and then directly provided to the corresponding data block for display by the knowledge middle platform 200, or provided to the corresponding data block for display by the knowledge middle platform 200 through the micro services. The user can edit the OT domain behavior tree by dragging and dropping various nodes, including function block nodes, as shown in the GUI at the lower left corner of FIG. 4E. For example, firstly, required data (such as workpiece machining parameters) are obtained from the database and server through the knowledge middle platform 200 to control the operation of the entire workcell. The workcell here is a production line, which includes machines, conveyor belts, robotic arms, personnel, PLC and AGB. In a specific implementation, the code development tool 301 in the IT domain may also be located on the same hardware device as the low code development tool 10, such as on the same computer.

FIG 5 illustrates a schematic structural diagram of another workflow constructing and monitoring system according to embodiments of this application. As shown in FIG. 5, the system can be configured to implement the method shown in FIG. 1A, implementing the workflow constructing and monitoring system shown in FIG. 3, or implementing the workflow constructing and monitoring system shown in any one of FIG. 4A to FIG. 4D, namely the OT domain low code development platform 100. The aforementioned OT domain low code development tool 10, OT domain microservice generator 20, runtime 30, and third-party device 60 may all be implemented as separate hardware devices, such as servers, workstations, microcontrollers or processing chips. Alternatively, these devices may be implemented on the same hardware device and stored as software programs in at least one memory, to implement the aforementioned OT domain low code development method by calling through at least one processor. The node library 110, resource library 150, and generated microservices 40 may be stored in at least one memory.

As shown in FIG. 5, the system may include at least one memory 51, at least one processor 52, and at least one display 53. In addition, it may further include other components such as communication ports (not shown in FIG. 5). These components communicate through a bus 54.

The at least one memory 51 is configured to store a computer program. The at least one memory 51 may include a computer-readable medium, such as a Random Access Memory (RAM). In addition, the at least one memory 51 may also store operating systems, etc. The operating systems include but are not limited to Android operating system, Symbian operating system, Windows operating system, Linux operating system, and so on. The above-mentioned computer storage program may include the following program modules: a node library 110, a graphical interface module 120, an edit processing module 130, a parsing and deployment module 140. Optionally, it may further include an OT domain microservice generator 20, runtime 30, and a third-party device 50.

The at least one processor 52 is configured to call the computer program stored in the at least one memory 51 to execute the workflow constructing and monitoring method described in the embodiments of this application. The at least one processor 52 may be a microprocessor, an application specific integrated circuit (ASIC), a digital signal processor (DSP), a central processing unit (CPU), a graphics processing unit (GPU), a state machine, or the like. It can receive and transmit data through the communication port.

The at least one monitor 53 is configured to display a graphical user interface.

Specifically, the at least one processor 52 is configured to call the computer program stored in the at least one memory 51 to enable the system to execute the workflow constructing and monitoring method in any implementation described above.

In addition, the communication interface is configured to achieve communication with other devices, such as communication with the knowledge middle platform 200.

In the embodiments of this application, the OT domain low code development tool 10 for implementing the graphical interface module 120, the edit processing module 130 and the parsing and deployment module 140 may be a lightweight web-based application program that can be implemented on industrial sites (such as edge devices or local servers) or in the cloud (such as AWS public cloud or OpenStack private cloud). Its visual engineering paradigm originates from the function block typed diagram (FBTD). The OT domain microservice generator 20 can use modern translation programming languages to generate standard APIs such as RESTful or RPC. The runtime 30 can simply implement the OT domain workflow and provide openness on the basis of an open-source community ecosystem (such as Python). The runtime 30 may be deployed on an embedded IoT device such as Single Board Computer (SBC).

It is to be mentioned that the embodiments of this application may include devices with architectures different from those shown in FIG. 5. The above architecture is only exemplary and is used for explaining the workflow constructing and monitoring method provided in the embodiments of this application.

In addition, the embodiments of this application further provide an IT domain and OT domain fused system, i.e., an ITOT system, which may include an IT device and the workflow constructing and monitoring system in any implementation of this application. In addition, it may further include an IT domain code development platform 300 shown in FIG. 4C and FIG. 4D.

In addition, the embodiments of this application further provide a computer-readable storage medium. The computer-readable storage medium stores a computer-readable code. The computer-readable code, when executed by a processor, causes the processor to perform the workflow constructing and monitoring method. In addition, the embodiments of this application further provide a computer program product. The computer program product is tangibly stored on a computer-readable medium and includes computer-readable instructions. The computer-readable instructions, when executed, causes at least one processor to perform the steps of the workflow constructing and monitoring method in the embodiments of this application.

Specifically, a system or device with a storage medium may be provided. The computer-readable code implementing the functions of any implementation of the embodiments described above is stored on the storage medium. The computer (or CPU or MPU) of the system or device can read and execute the computer-readable code stored in the storage medium. In addition, some or all of the actual operations may be completed by the operating system on the computer through the instructions on the basis of the computer-readable code. The computer-readable code read from the storage medium may also be written to the memory set in the expansion board inserted into the computer or to the memory set in the expansion unit connected to the computer. Then, the instructions on the basis of the computer-readable code cause the CPU or other components installed on the expansion board or expansion unit to execute some or all of the actual operations, thus achieving the functions of any implementation of the implementations described above. In this embodiment, examples of the computer-readable medium include but are not limited to floppy disks, CD ROMs, magnetic disks, optical disks (such as CD ROMs, CD-R, CD-RW, DVD-ROMs, DVD-RAMs, DVD-RW and DVD+RW), memory chips, ROMs, RAMs, ASICs, configured processors, all-optical media, all magnetic tapes or other magnetic media, or any other medium from which computer processors can read instructions. In addition, various other forms of computer-readable media may send or carry instructions to a computer, including routers, private or public networks, or other wired and wireless transmission devices or channels. For example, computer-readable instructions may be downloaded from a server computer or cloud through a communication network. The instructions may include codes in any computer programming language, including C, C++, C language, Visual Basic, Java, and JavaScript.

It is to be understood that, not all steps and modules in the processes and the diagrams of the system structures described above are necessary, and some steps or modules may be omitted according to the actual need. The execution sequence of the steps is not fixed and may be adjusted according to the need. The system structures described in the embodiments described above may be physical structures or logic structures. That is, some modules may be implemented by the same physical entity, or some modules may be implemented by multiple physical entities, or may be implemented by some components in multiple independent devices together.

The foregoing descriptions are merely preferred embodiments of the present disclosure, but are not intended to limit the present disclosure. Any modification, equivalent replacement, or improvement and the like made within the spirit and principle of the present disclosure shall fall within the protection scope of the present disclosure.

## Claims

1. A workflow constructing and monitoring method, comprising:
generating a behavior tree corresponding to a workflow on the basis of a behavior tree construction operation of a user on a graphical user interface, the behavior tree comprising function block nodes, each function block node correspondingly implementing a service operation;
adding and connecting at least one data block to each function block node of at least one function block node in the behavior tree, each data block being configured to present corresponding data in the service operation of the function block node connected thereto; and
parsing the behavior tree connected with data blocks, deploying the workflow corresponding to the behavior tree to a runtime of a corresponding workcell so that the runtime executes the workflow to control each resource in the workcell to execute the service operation according to the workflow, and providing corresponding data obtained in an execution process of the service operation to the corresponding data block for display.

2. The workflow constructing and monitoring method according to claim 1, wherein each data block comprises:
a data block label for indicating a type of the data block; and
a data block body with a display area for presenting specific data.

3. The workflow constructing and monitoring method according to claim 2, wherein the size of the display area is adjustable.

4. The workflow constructing and monitoring method according to claim 2, wherein the type of the data block comprises: some or all of data pair, datasheet, image, video and chart.

5. The workflow constructing and monitoring method according to any one of claims 1 to 4, wherein the workflow is an OT domain workflow; the workcell is a workcell in an OT domain; and the resource is an OT resource.

6. The workflow constructing and monitoring method according to claim 5, further comprising: generating a microservice on the basis of the behavior tree, so that an IT device triggers the runtime of the workcell to execute the OT domain workflow by calling the microservice.

7. The workflow constructing and monitoring method according to claim 6, wherein the providing corresponding data obtained in an execution process of the service operation to the corresponding data block for display comprises:
providing the corresponding data obtained in the execution process of the service operation to the corresponding data block for display directly; or
providing the corresponding data obtained in the execution process of the service operation to the corresponding data block for display through the microservice.

8. The workflow constructing and monitoring method according to claim 6, further comprising: registering the microservice on a knowledge middle platform, so that the IT device triggers the runtime of the workcell to execute the OT domain workflow by calling the microservice through the knowledge middle platform.

9. The workflow constructing and monitoring method according to claim 8, wherein the providing corresponding data obtained in an execution process of the service operation to the corresponding data block for display comprises:
providing the corresponding data obtained in the execution process of the service operation to the knowledge middle platform; and
performing, by the knowledge middle platform, processing comprising filtering on the data, and then providing the data to the corresponding data block for display directly or through the microservice.

10. A workflow constructing and monitoring system, comprising:
a node library (110) provided with behavior tree nodes for constructing behavior trees and various types of data blocks, the behavior tree nodes comprising: function block nodes, each function block node correspondingly implementing a service operation, each data block being configured to present corresponding data in the service operation of the function block node connected thereto;
a graphical interface module (120) configured to provide a user a graphical user interface for behavior tree construction and data block addition and connection operations;
an edit processing module (130) configured to generate a behavior tree corresponding to a workflow on the basis of a behavior tree construction operation of the user on the graphical user interface, and add and connect at least one data block to each function block node of at least one function block node in the behavior tree on the basis of the data block addition and connection operations; and
a parsing and deployment module (140) configured to parse the behavior tree connected with data blocks, deploy the workflow corresponding to the behavior tree to a runtime (30) of a corresponding workcell so that the runtime executes the workflow to control each resource in the workcell to execute the service operation according to the workflow, and provide corresponding data obtained in an execution process of the service operation to the corresponding data block for display.

11. A workflow constructing and monitoring system, comprising:
at least one memory (51) configured to store a computer-readable code; and
at least one processor (52) configured to call the computer-readable code to perform the steps of the workflow constructing and monitoring method according to any one of claims 1 to 9.

12. An IT domain and OT domain fused system, comprising:
an IT device; and
the workflow constructing and monitoring system according to claim 10 or 11, wherein the workflow is an OT domain workflow; the workcell is a workcell in an OT domain; the resource is an OT resource; and the workflow constructing and monitoring system further comprises: an OT domain microservice generator (20) for generating a microservice (40) on the basis of the behavior tree connected with data blocks, so that the IT device triggers the runtime (30) of the workcell to execute the OT domain workflow by calling the microservice (40).

13. A computer-readable medium, wherein the computer-readable medium stores computer-readable instructions, the computer-readable instructions, when executed by a processor, performing the steps of the workflow constructing and monitoring method according to any one of claims 1 to 9.

14. A computer program product, wherein the computer program product is tangibly stored on a computer-readable medium and comprises computer-readable instructions, the computer-readable instructions, when executed, causing at least one processor to perform the steps of the workflow constructing and monitoring method according to any one of claims 1 to 9.
